# EUROPÄISCHE PATENTSCHRIFT

(11) **EP 1 254 412 B1**
(45) Veröffentlichungstag und Bekanntmachung des Hinweises auf die Patenterteilung: **02.03.2005**
(21) Anmeldenummer: 00971369.4
(22) Anmeldetag: 12.10.2000
(51) Int. Cl.: G06F 17/30

(54) **VERFAHREN ZUR DATENVERWALTUNG**
DATA MANAGEMENT METHOD
PROCEDE POUR LA GESTION DE DONNEES

(30) Priorität: 27.10.1999 DE 19951756
(43) Veröffentlichungstag der Anmeldung: 06.11.2002
(73) Patentinhaber: Lechwerke AG, 86150 Augsburg (DE)
(72) Erfinder: POOST, Kurt, 86150 Ausburg (DE)
(74) Vertreter: Betten & Resch
(86) Internationale Anmeldenummer: PCT/EP2000/010059
(87) Internationale Veröffentlichungsnummer: WO 2001/031498

(56) Entgegenhaltungen:
- EP-A- 0 458 720
- US-A- 5 835 712
- REINHART G ET AL: "INTEGRATION VON ZULIEFERERN IN DAS DATEN- UND PROZESSMANAGEMENT INTEGRATION OF SUPPLIERS INTO THE DATA AND PROCESS MANAGEMENT" ZWF ZEITSCHRIFT FUR WIRTSCHAFTLICHE FERTIGUNG UND AUTOMATISIERUNG, CARL HANSER VERLAG. MUNCHEN, DE, Bd. 91, Nr. 9, 1. September 1996 (1996-09-01), Seiten 391-394, XP000640066 ISSN: 0947-0085
- HUTCHINSON G ET AL: "Implementation of dynamic web database interface using cold fusion" ACM SIGUCCS. USER SERVICES CONFERENCE 98. BRANCHING OUT, SIGUCCS '98. USER SERVICES CONFERENCE FOR COLLEGE AND UNIVERSITY COMPUTING SERVICES ORGANIZATIONS, BLOOMINGTON, IN, USA, 25-28 OCT. 1998, Seiten 131-135, XP002196494 1998, New York, NY, USA, ACM, USA ISBN: 1-58113-006-6

## Beschreibung

Die Erfindung betrifft ein Verfahren, ein Computerprogramm und ein Computersystem zur Verwaltung von Daten in einem Datenbanksystem.

Zunächst sollen einige für das Verständnis der Erfindung wichtige Begriffe definiert werden.
Datenbanksystem, Datenbank: Anwendungsprogramm zur Verwaltung von Daten auf einem physikalischen Speicher.
Webseite: Der einer über das www (world wide web) zugreifbaren, an einem Bildschirm dargestellbaren Seite zugrunde liegende Programmcode, der Verweise (sog. Hyperlinks) auf andere Webseiten erlaubt, geschrieben in HTML (Hyper Text Markup Language) oder XML (Extended Markup Language).
Webserver: Computer mit Internetanschluss, der Dienste wie das Herunterladen einer Webseite über das Internet erlaubt.
Verknüpfungen (Relationen) zwischen Daten: Beziehung zwischen Bestandteilen von strukturierten Datensätzen (Tabellen) in einer Datenbank.
SQL-Befehle: (Structured Query Language), strukturierte Abfragesprache für Datenbanken.
OBCD: (Open Data Base Connective), offener Datenbankschnittstellenstandard.

Ein Datenbanksystem besteht in der Regel aus dem Datenbestand, der sogenannten Datenbasis, die in einem maschinenlesbaren Speicher abgespeichert wird sowie aus einem EDV-System, auf dem Anwendungsprogramme ablaufen, um auf die Datenbasis zuzugreifen, Bestandteile der Datenbasis anzuzeigen, nach Daten zu suchen sowie um die Datenbasis zu aktualisieren, Daten einzugeben und zu löschen usw.

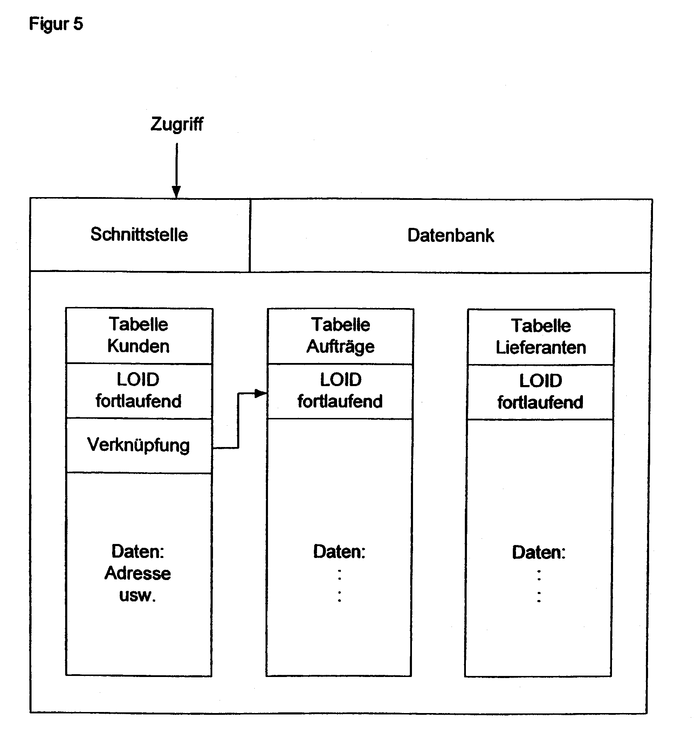

Für umfangreichere Computer- oder Internetanwendungen sind in fast allen Bereichen mehr oder weniger umfangreiche Datenbanksysteme erforderlich. Weit verbreitet sind sogenannte relationale Datenbanksysteme, deren Grundlage eine tabellenartige Struktur der Daten ist. Jede Zeile der Tabelle stellt einen Datensatz dar und die einzelnen Spalten enthalten die Datenfelder oder Attribute. Bei derartigen relationalen Datenbanksystemen kann eine Beziehung bzw. Relation zwischen verschiedenen Datenbeständen aufgebaut werden. Figur 5 zeigt schematisch eine derartige relationale Datenbank, die beispielsweise drei Datensätze oder Tabellen "Benutzer", "Firma" und "Aufträge" enthält. Neben einer fortlaufenden Nummerierung (LOID fortlaufend) enthält jede Tabelle Verknüpfungen (Relationen) zu anderen Tabellen, so dass sich beispielsweise für einen gegebenen Kunden alle Aufträge ermitteln lassen oder umgekehrt für eine vorgegebene Auftragsnummer der Kunde mit zusätzlichen Informationen wie beispielsweise eine Adresse oder das Zahlungsverhalten.

Derartige relationale Datenbanken eignen sich insbesondere zur Verwaltung großer Datenmengen im kaufmännischen Bereich. Ein Nachteil liegt jedoch darin, dass die Datenstruktur starr und unflexibel ist und spätere Änderungen nach der Projektierung der Datenbank nur noch mit großem Aufwand vorgenommen werden können. Ist beispielsweise eine zusätzliche Ebene in einer Baumstruktur erforderlich, so muss der Programmcode des Datenbanksystems geändert werden, was eine Neu-übersetzung des Programms erfordert. Relationale Datenbanken sind beispielsweise im dtv-Computer-Lexikon beschrieben.

Einen anderen Datenbanktyp stellt die sogenannte objektorientierte Datenbank dar, die keine starre Spaltenstrukturen enthält, wobei die Verknüpfungen jedoch ebenfalls in den jeweiligen Datensätzen enthalten sind. Eine Beschreibung objektorientierter Datenbanken findet man z. B. ebenfalls im dtv-Computer-Lexikon beschrieben.

Insbesondere für Datenverarbeitungsprogramme für Internetanwendungen besteht ein Bedarf an Datenbanksystemen, die leicht erweiterbar und ergänzbar sind, ohne den laufenden Betrieb aufgrund einer Neuinstallierung vollständig unterbrechen zu müssen.

Das amerikanische Patent US 5,835,712 beschreibt ein System und ein Verfahren zur Erstellung von Woridwide Web-Anwendungen auf dem Internet, wobei eine Vorlage (template) bereitgestellt wird, die sowohl für Client als auch Server zur Erstellung des HTML-Quelltextes zugreifbar ist. Das verwendete und in Fig. 9B des Patentes beschriebene Datenbankmodell ist das einer relationalen Datenbank, wobei die jeweilige Vorlage angibt, welche Informationen aus der Datenbank auf der Webseite enthalten sein soll und wie diese zu formatieren ist.

Der Erfindung liegt daher die Aufgabe zugrunde, ein Verfahren zur Verwaltung von Daten in einem Datenbanksystem auf einem Computer vorzuschlagen, welches eine einfache Ergänzung der Datenbankstruktur zulässt, wobei die Verfügbarkeit der Datenbank möglichst wenig beeinträchtigt werden soll.

Eine weitere Aufgabe der vorliegenden Erfindung ist es, ein Verfahren zur Verwaltung von Daten in einem Datenbanksystem und ein Computerprogramm mit einer Datenbank und mit einer Vielzahl von Programmmodulen zur Dateneingabe, Datenverarbeitung und Datenausgabe vorzuschlagen, die einfach über das Internet bedient werden können und außerdem eine unkomplizierte Erweiterung und/oder Ergänzung zulassen.

Gelöst werden die genannten Aufgaben durch ein Verfahren zur Verwaltung von Daten in einem Datenbanksystem auf einem Computer, wobei die Daten in dem Datenbanksystem ohne strukturelle Verknüpfungen zueinander gehalten werden, die Gesamtheit der Datenverwaltungsvorgänge auf eine Vielzahl von Webseiten aufgeteilt ist, welche die jeweils zugehörigen Datenbankzugriffsbefehle enthalten und die Gesamtheit der Verknüpfungen von in dem Datenbanksystem gehaltenen Daten nur durch Verweise zwischen den jeweils zugehörigen Webseiten gebildet wird.

Vorzugsweise kann die Datenverwaltung mittels der Webseiten über das Internet erfolgen.

Erfindungsgemäß wird zur Lösung der genannten Probleme außerdem ein Computersystem zur Verwaltung von Daten in einem erfindungsgemäßen Datenbanksystem gemäß Anspruch 20 vorgeschlagen.

Zur Lösung der genannten Aufgaben wird weiterhin eine Computerprogramm mit einer Datenbank und einer Vielzahl von Programmmodulen zur Dateneingabe, Datenverarbeitung und Datenausgabe vorgeschlagen, wobei jedes Programmmodul auf einer Webseite realisiert ist und jede Webseite die für das Programmmodul erforderlichen Datenbankzugriffsbefehle enthält.

Vorteilhafte Wertebildungen der Erfindung sind in den abhängigen Ansprüchen beschrieben.

Vorzugsweise kann das erfindungsgemäße Verfahren und das erfindungsgemäße Computerprogramm über das Internet bedient werden.

Die Datenbankzugriffsbefehle sind dabei vorzugsweise in SQL-Code realisiert, so dass auf mehrere Datenbanken mit unterschiedlichen Formaten zugegriffen werden kann.

Die Webseiten können in HTML-, XML- oder DHTLM-Code ausgeführt sein.

Gemäß einem bevorzugten Ausführungsbeispiel werden Löschvorgänge von in dem Datenbanksystem gehaltenen Daten zeitlich versetzt ausgeführt, nachdem zu löschende Daten mittels einer Webseite identifiziert worden ist. Dadurch kann der (vor allem bei größeren Datensätzen) zeitaufwendige Löschvorgang unabhängig von dem Datenbankzugriff ausgeführt werden, der dann schneller beendet werden kann.

Die Erfindung ermöglicht ein sehr flexibles System zur Bearbeitung von Daten jedweder Art, das ohne Systemstilistandszeit ergänzbar oder erweiterbar ist. Die komplette Realisierung des Computerprogramms mittels Webseiten ermöglicht eine größtmögliche Modularität und außerdem eine leichte Bedienbarkeit über das Internet. Das erfindungsgemäße Verfahren, Computerprogramm und Computersystem ermöglicht eine einfache Bedienbarkeit, hohe Betriebssicherheit und Anpassungsfähigkeit.

Weitere Aufgaben, Merkmale und Vorteile der Erfindung werden aus der folgenden Beschreibung bevorzugter Ausführungsbeispiele unter Bezugnahme auf die beiliegenden Zeichnungen deutlich, in denen:
- Figur 1: ein schematisches Diagramm zur Erläuterung der Erfindung ist;
- Figur 2: die Struktur des erfindungsgemäßen Computerprogramms schematisch darstellt;
- Figur 3: schematisch eine erfindungsgemäße Webseite zeigt;
- Figur 4: ein Flussdiagramm zur Verdeutlichung eines Datenbankzugriffs zeigt; und
- Figur 5: das Datenmodell einer herkömmlichen relationalen Datenbank zeigt.

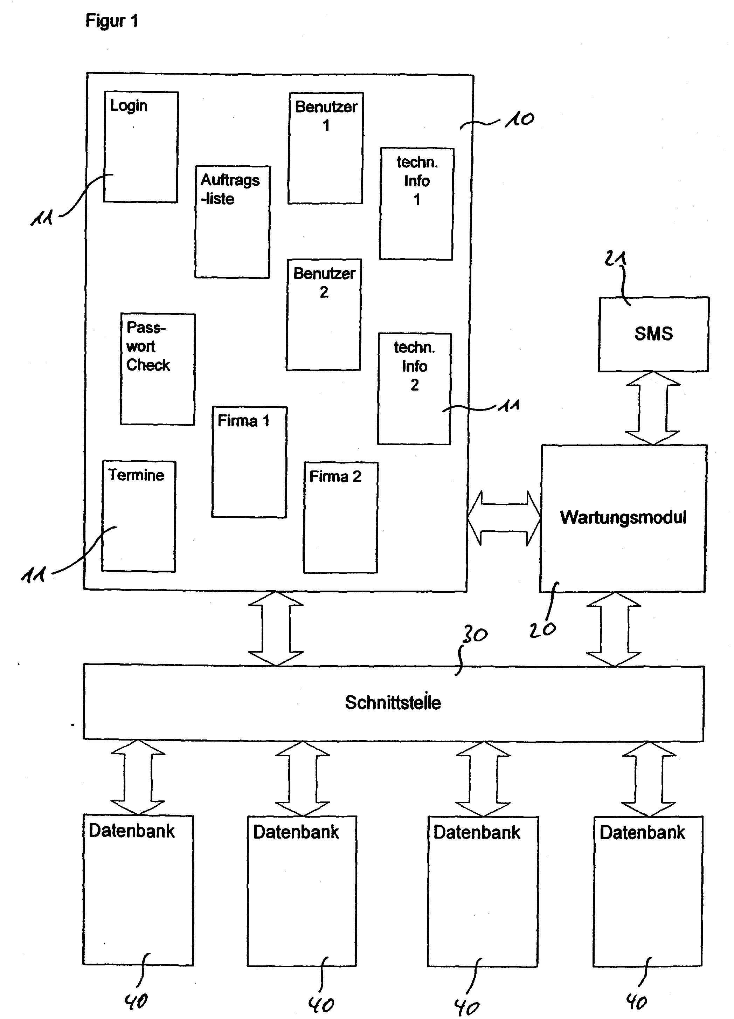

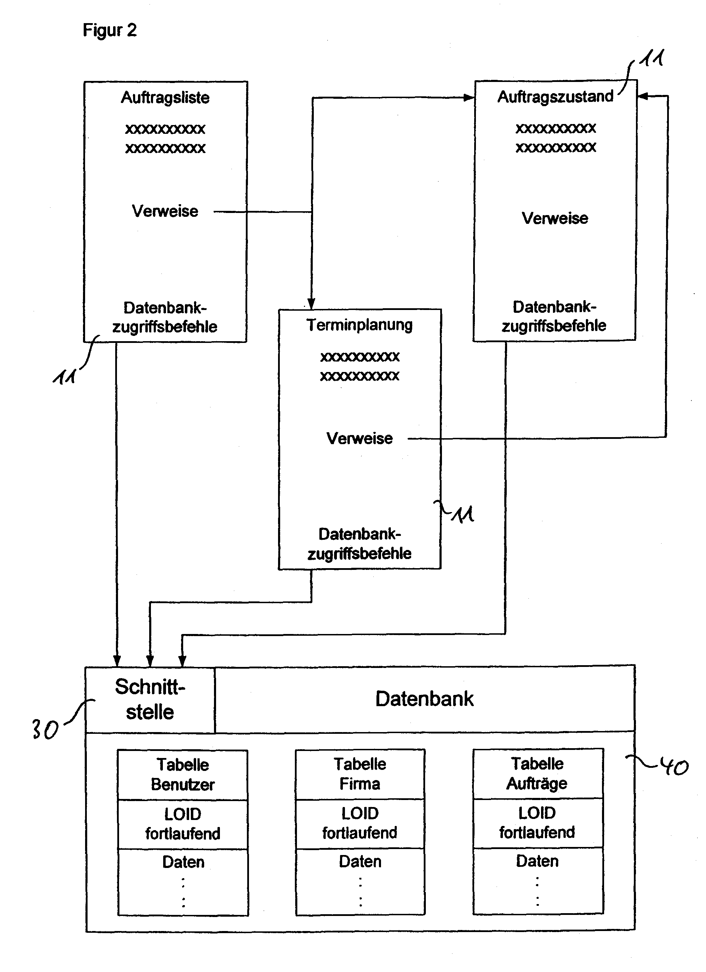

Figur 1 zeigt eine schematische Überblicksdarstellung des erfindungsgemäßen Computerprogramms zur Datenverwaltung. Die Daten werden in einer oder einer Vielzahl von Datenbanken 40 als voneinander unabhängige Tabellen oder Container gehalten (siehe Figur 2). Bezugszeichen 10 bezeichnet das erfindungsgemäße Computerprogramm zur Datenverwaltung, das aus einer Vielzahl von Webseiten 11 besteht, die jeweils eine Funktionseinheit zur Ausführung spezifischer Funktionen darstellen. Beispielsweise gibt es eine Webseite für die Login-Prozedur, eine Webseite für die Passwortprüfung, individuelle Webseiten für einzelne Benutzer des Systems und Webseiten für verschiedene Firmen. Dem Datenverwaltungsprogramm können beliebig neue Webseiten hinzugefügt werden oder alte, nicht mehr benötigte Seiten gelöscht werden. Jede Webseite setzt sich aus vier Teilen zusammen: Variablendeklaration, Datenbankabfrage und -selektion, Variablenzuweisungen, die lokal beim Benutzer gespeichert werden (Cookies) und dem Layout der Seite. Die Seite kann durch HTML-Code, D(Dynamic)HTML-Code oder XML-Code implementiert werden.

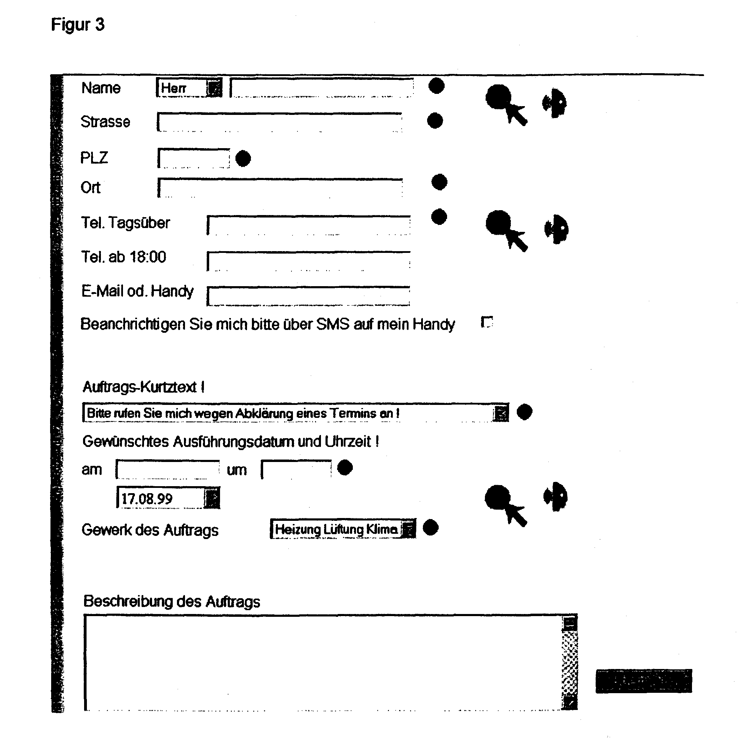

Figur 3 zeigt ein Beispiel der Benutzeroberfläche einer derartigen Webseite. Der Benutzer kann interaktiv standardisierte Daten wie Adresse, Telefonnummer usw., aber auch individuelle Daten wie die Beschreibung des Auftrages eingeben. Der Benutzer wird durch das Programm immer zu der nächsten jeweils benötigten Webseite geführt, wo erneut eine interaktive Datenein- bzw. und -ausgabe möglich ist.

Jede Webseite kann Eingabefunktionen, Ausgabefunktionen, Verarbeitungsfunktionen wie Berechnungen, Verweise an andere Webseiten und Datenbankzugriffsfunktionen enthalten. Ein Datenbankzugriff von einer der Webseiten 11 auf die Datenbank(en) 40 erfolgt, wie in Figur 1 schematisch dargestellt ist, über eine Schnittstelle 30. Dabei kann es sich vorzugsweise um eine ODBC (Open Data Base Connective)-Schnittstelle handeln, die in der Lage ist, die Verbindung zu verschiedenen Datenbanken mit verschiedenen Systemen herzustellen.

Ferner ist ein Wartungsmodul 20 vorgesehen, das Funktionen wie eine Datenarchivierung, eine Zeitsteuerung und eine Verbindung zu drahtlosen Kommunikationsmitteln (SMS) erfüllt. Ferner dient, wie später beschrieben wird, das Wartungsmodul 20 dazu, Löschvorgänge in der Datenbank 40 auszuführen.

Die Datenstruktur des erfindungsgemäßen Datenverwaltungsprogramms wird im Folgenden anhand von Figur 2 erläutert. Die Daten sind in der Datenbank 40 als Tabelle oder Container ohne datenbankunterstützte Relationen bzw. Verknüpfungen gespeichert. In den jeweiligen Tabellen werden vorzugsweise nur die Feldtypen Zahl, Text und Memo verwendet, aber keine Datumsfelder benutzt. Der Zugriff zur Datenbank 40 erfolgt über die Schnittstelle 30, die, wie oben erläutert wurde, vorzugsweise als ODBC-Schnittstelle ausgeführt ist. Die Schnittstelle kann vorteilhaft mittels des Programmiertools cold fusion implementiert werden.

Die einzelnen Webseiten 11 enthalten neben Eingabe-, Ausgabe- und Verarbeitungsfunktionalitäten Verweise auf andere Webseiten, die den Verknüpfungen in relationalen Datenbanken entsprechen und diese ersetzen. Dadurch wird das Datenmodell von der Datenbank selbst entkoppelt und in die Webseiten integriert. So kann man bei der Projektierung für einen Bereich des Programms die Datenbankstruktur ändern, ohne das System neu zu kompilieren oder die Datenbank zeitweise außer Betrieb nehmen zu müssen. Ist es beispielsweise erforderlich, eine endliche Baumstruktur zu erstellen und wird vergessen, eine Ebene in diese Struktur zu integrieren, muss bei dem erfindungsgemäßen Datenverwaltungsprogramm nicht, wie bei einer herkömmlichen relationalen Datenbank der Programmcode der Datenbank bearbeitet werden. Da Verknüpfungen in der Datenbank notwendig sind, muss in diesem Fall erfindungsgemäß nur die Tabelle kopiert und eine neue Webseite erzeugt werden, die auf diese Informationen zugreifen kann. Diese Datei wird einfach auf den Webserver, auf dem das erfindungsgemäße Programm abläuft, verfügbar gemacht und kann nach dem Einfügen sofort von jedem Benutzer aufgerufen werden.

In einem anderen Fall sei angenommen, dass in eine Tabelle, beispielsweise die Tabelle "Aufträge" neue Datensätze eingefügt werden sollen. Da bei dem erfindungsgemäßen Computerprogamm zwischen den einzelnen Tabellen der Datenbank keine Beziehungen bestehen, bearbeitet das Programm auch diese neuen Datensätze erfindungsgemäß.

Das Datenmodell, d.h. die Verknüpfungen zwischen den einzelnen Datensätzen, kann erfindungsgemäß bei einer Weiterentwicklung oder Erweiterung des Programms durch zusätzliche Webseiten einfach mitwachsen und muss nicht schon komplett vorgeplant werden.

Jede Webseite enthält außerdem einen Teil des Datenmodells in Form von Datenbankzugriffsbefehlen. Diese sind vorzugsweise als SQL-Befehle implementiert, die eine größtmögliche Unabhängigkeit von verschiedenen Datenbanksystemen garantieren. Es werden daher vorzugsweise nur die grundlegenden Befehle wie Aktualisieren (Update), Einfügen (Insert), Löschen (Delete), Suchen (Search), Ordnen nach (Sort from) sowie die Operatoren und, oder, nicht verwendet, die allen Datenbanksystemen gemeinsam sind.

Jede Webseite bei dem erfindungsgemäßen Datenverwaltungsprogramm entspricht der Funktion eines Programmmoduls oder Unterprogramms. Anstatt ein solches aufzurufen, wird erfindungsgemäß eine Webseite aufgerufen. Die Seite enthält nur diejenigen Datenbankzugriffsbefehle und Verweise, d.h. nur den Teil des Datenmodells, der für die Entwicklung der in der Webseite enthaltenen Funktionen notwendig ist. Durch diese Zuordnung wird eine größtmögliche Modularität des erfindungsgemäßen Datenverwaltungsprogramms erreicht, was die Erweiterung wesentlich erleichtert und aufgrund der vereinfachten Testmöglichkeiten die Betriebssicherheit erheblich steigert.

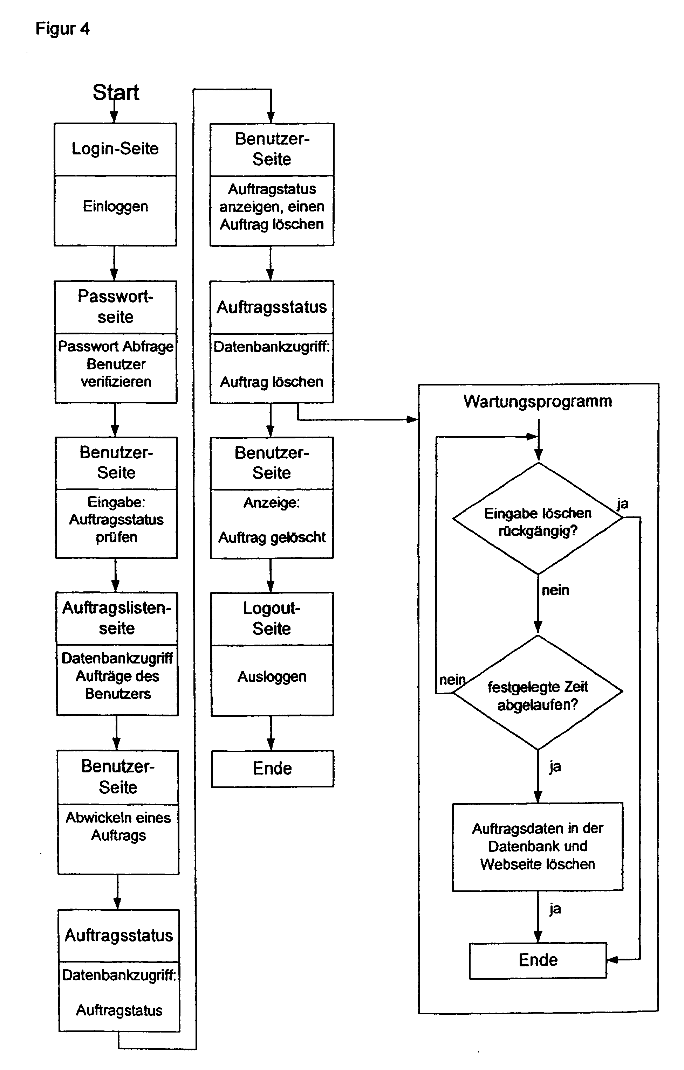

Die Funktionsweise des erfindungsgemäßen Verfahrens und des erfindungsgemäßen Computerprogramms zur Datenverwaltung wird im Folgenden anhand eines Beispiels unter Bezugnahme auf das Flussdiagramm von Figur 4 erläutert. Der Benutzer loggt sich über eine Login-Webseite in das System ein. Dies kann von einem Host-Computer, irgendeinem anderen mit Internetzugang versehenen Computer oder auch über ein mobiles Endgerät mit Internetzugang erfolgen. Die Login-Seite verweist nach Beendigung der Loginprozedur auf die Passwort-Seite, die den Benutzer nach seinem Passwort, seiner Benutzerkennung, Geheimnummer oder dergleichen fragt und diesen anhand der Benutzereingabe identifiziert. Dann springt das Programm weiter zur Benutzer-Seite, deren Funktionen und Layout speziell auf die Bedürfnisse des jeweiligen Benutzers zugeschnitten ist. Dort kann der Benutzer dann die von ihm gewünschten Aufgaben ausführen, in dem Beispiel von Figur 4 beispielsweise den Auftragsstatus einiger von dem Benutzer vergebener Aufträge zu prüfen. Gibt der Benutzer den Befehl "Auftragsstatus prüfen" durch Mausklick oder Tastendruck oder dergleichen ein, so springt das Programm weiter zur Auftragslisten-Seite. Diese enthält die erforderlichen Datenbankzugriffsbefehle, um auf die Auftragslistentabelle in der Datenbank zugreifen zu können. Durch Rücksprung auf die Benutzer-Seite führt das Programm eine Filterfunktion aus, so dass nur die der Benutzer-Seite zugehörigen Aufträge angezeigt werden. Der Verweis der Webseiten aufeinander ersetzt somit die relationale Beziehung der Tabellen untereinander in einer relationalen Datenbank.

Von den angezeigten Aufträgen klickt der Benutzer beispielsweise einen zweifach an und veranlasst damit, dass die Auftragsstatus-Seite angezeigt wird, die den aktuellen Auftragsstatus des angegebenen Auftrags aus der Datenbank abruft, welcher dann auf der Benutzer-Seite angezeigt wird.

Bei dem vorliegenden Beispiel sei angenommen, dass der Nutzer sich entschließt, einen der Aufträge zu löschen und dies durch Markierung des Auftrages und Aktivierung eines entsprechenden Schaltfeldes eingibt. Das Programm springt dann zur Auftragslisten-Seite, löscht den Auftrag und geht zurück zur Benutzer-Seite, die anzeigt, dass der Auftrag gelöscht ist. Durch den Löschbefehl wird das Wartungsprogramm aktiviert, das in einer Warteschleife abwartet, ob ein Befehl zur Rückgängigmachung des Löschvorgangs eingegeben wird. Ist dies innerhalb einer festgelegten Zeit der Fall, wird der entsprechende Datensatz nicht gelöscht und die Verarbeitung des Wartungsprogrammes wird beendet. Wird innerhalb der festgelegten Zeit kein Rückgängigmachungsbefehl eingegeben, veranlasst das Wartungsprogramm die Löschung der entsprechenden Wartungsdaten in der Datenbank und der Auftragsstatus-Daten usw. in den zugehörigen Webseiten. Der vergleichsweise zeitaufwendige Löschvorgang kann auf diese Art und Weise zu einer Zeit ausgeführt werden, wenn der Webserver weniger belastet ist, beispielsweise nachts oder am Wochenende.

Durch die Erfindung wird ein modular aufgebautes, sehr flexibles und erweiterungsfähiges Programm zur Datenverwaltung in einem Datenbanksystem dadurch realisiert, dass alle Programmfunktionen mit Ausnahme von Zentralfunktionen wie Zeitsteuerung, Schnittstelle zu Mobilendgeräten usw., die von einem Wartungsmodul realisiert werden, auf entsprechenden Webseiten implementiert sind. Das Datenbankmodell wird durch die in den Webseiten enthaltenen und den auf dieser Webseite beinhalteten Funktionen zugeordneten Datenbankzugriffsbefehlen sowie durch Verweise (Links) der Webseiten aufeinander realisiert.

## Patentansprüche

1. Verfahren zur Verwaltung von Daten in einem auf einem Computer installierten Datenbanksystem, wobei:
- die Daten in dem Datenbanksystem (40) ohne strukturelle Verknüpfungen zueinander gehalten werden, charakterisiert dadurch, dass die Gessamtheit der Datenverwaltungsvorgänge und Datenzugriffe auf eine Vielzahl von Webseiten (11) aufgeteilt ist, welche die jeweils zugehörigen Datenbankverwaltungs- und Datenbankzugriffsbefehle umfassen, und
- die Gesamtheit der Verknüpfungen von in dem Datenbanksystem (40) gehaltenen Daten zueinander nur durch Verweise der jeweils zugehörigen die entsprechenden Datenbankzugriffsbefehle beinhaltenden Webseiten (11) aufeinander gebildet wird.

2. Verfahren nach Anspruch 1, **dadurch gekennzeichnet, dass** die Datenverwaltung mittels der Webseiten (11) über das Internet erfolgt.

3. Verfahren nach Anspruch 1 oder 2, **dadurch gekennzeichnet, dass** die Datenbankzugriffsbefehle in SQL-Standard implementiert sind.

4. Verfahren nach einem der Ansprüche 1 bis 3, **dadurch gekennzeichnet, dass** die Webseiten (11) in HTML- oder XML-Code implementiert sind.

5. Verfahren nach einem der Ansprüche 1 bis 4, **dadurch gekennzeichnet, dass** das Datenbanksystem (40) mehrere Datenquellen mit unterschiedlichen Datenbankformaten aufweist.

6. Verfahren nach einem der Ansprüche 1 bis 5, **dadurch gekennzeichnet, dass** über eine Webseite (11) eine Einloggprozedur und/oder eine Benutzer-Berechtigungsprüfung ausgeführt wird.

7. Verfahren nach einem der Ansprüche 1 bis 6, **dadurch gekennzeichnet, dass** ein Löschvorgang im Datenbanksystem (40) zeitlich versetzt ausgeführt wird, nachdem zu löschende Daten mittels einer Webseite (11) identifiziert worden sind.

8. Verfahren nach Anspruch 7, **dadurch gekennzeichnet, dass** der Löschvorgang innerhalb einer festgelegten Zeit widerrufen werden kann.

9. Computerprogramm zur Verwaltung von Daten in einem Datenbanksystem aufweisend einen Programmcode zur Ausführung der Verfahrensschritte nach einem der Ansprüche 1 bis 9, wenn das Programm auf einem Computer abläuft.

10. Datenstruktur, in der mittels eines Datenbanksystems eine Vielzahl von Daten gespeichert ist,
charakterisiert durch
- eine Vielzahl von Webseiten (11), auf die die Gesamtheit der Datenverwaltungsvorgänge und Datenzugriffe in Form von jeweils zugehörigen Datenbankverwaltungs- und Datenbankzugriffsbefehlen aufgeteilt ist,
und dadurch, dass
- die Gesamtheit der Verknüpfungen von in dem Datenbanksystem (40) enthaltenen Daten zueinander nur durch Verweise der jeweils zugehörigen, die entsprechenden Datenbankzugriffsbefehle beinhaltenden Webseiten (11) aufeinander gebildet wird.

11. Datenstruktur nach Anspruch 10, **dadurch gekennzeichnet, dass** eine Dateneingabe und/oder -ausgabe über das Internet ausführbar ist.

12. Datenstruktur nach Anspruch 10 oder 11, **dadurch gekennzeichnet, dass** die Datenbankzugriffsbefehle in SQL-Code implementiert sind.

13. Verwendung des Computerprogramms nach Anspruch 9 zur Verwaltung der Instandhaltung einer Vielzahl von voneinander entfernten Geräten.

14. Verwendung des Computerprogramms nach Anspruch 9 zum Betrieb einer Auftragsbörse zur Entgegennahme, Speicherung, Übermittlung, Dokumentation und Abrechnung von Arbeitsaufträge zwischen einer festgelegten Anzahl von Auftraggebern und Auftragnehmern.

15. Computersystem zur Verwaltung von Daten in einem Datenbanksystem (40), in dem die Daten ohne strukturelle Verknüpfungen zueinander gespeichert sind, charakterisiert durch
- eine Einrichtung zur Ausführung von Datenverwaltungsvorgängen und Datenzugriffen, die in ihrer Gesamtheit auf eine Vielzahl von Webseiten, welche die jeweils zugehörigen Datenbankverwaltungs- und Datenbankzugriffsbefehle umfassen, aufgeteilt sind,
und dadurch, dass
- eine Einrichtung, die die Gesamtheit der Verknüpfungen von in dem Datenbanksystem (40) enthaltenen Daten zueinander nur durch Verweise der jeweils zugehörigen,die entsprechenden Datenbankzugriffsbefehle beinhaltenden Webseiten aufeinander bildet.

16. Computersystem nach Anspruch 15, **dadurch gekennzeichnet, dass** das Computersystem einen Internetanschluss aufweist und auf die Webseiten (11) über das Internet zugegriffen werden kann.

## Claims

1. Method for managing data in a database system installed on a computer, where:
- The data is held in the database system (40) without structural interrelationships, **characterized in that** the totality of the data management operations and data access actions is apportioned to a number of web pages (11), which include the respective associated database management and database access commands, and
- the totality of the interrelationships linking the data held in the database system (40) is formed only by references of the respective associated web pages (11) containing the corresponding database access commands, to one another.

2. Method according to Claim 1, **characterized in that** the data management takes place by means of the web pages (11) over the Internet.

3. Method according to Claim 1, **characterized in that** the database access commands are implemented in SQL Standard.

4. Method according to one of Claims 1 to 3, **characterized in that** the web pages (11) are implemented in HTML or XML code.

5. Method according to one of Claims 1 to 4, **characterized in that** the database system (40) has several data sources with different database formats.

6. Method according to one of Claims 1 to 5, **characterized in that** a login procedure and/or a check of user rights is executed via a web page (11).

7. Method according to one of Claims 1 to 6, **characterized in that** a delete operation in the database system (40) is executed with a time delay, after data to be deleted has been identified by means of a web page (11).

8. Method according to Claim 7, **characterized in that** the delete operation can be revoked within a specified time.

9. Computer program for managing data in a database system, having program code for executing the procedural steps according to one of Claims 1 to 9, if the program runs on a computer.

10. Data structure, in which a large volume of data is stored by means of a database system, **characterized by**
- a number of web pages (11), to which the totality of the data management operations and data access actions is apportioned in the form of respective associated database management commands and database access commands,
and in that
- the totality of the interrelationships linking the data held in the database system (40) is formed only by references of the respective associated web pages (11) containing the corresponding database access commands, to one another.

11. Data structure according to Claim 10, **characterized in that** data input and/or output can be executed over the Internet.

12. Data structure according to Claim 10 or 11, **characterized in that** the database access commands are implemented in SQL code.

13. Use of the computer program according to Claim 9 for managing the maintenance of number of devices remote from one another.

14. Use of the computer program according to Claim 9 to operate a job exchange for accepting, saving, transmitting, documenting and accounting of job orders between a specified number of ordering and executing parties.

15. Computer system for managing data in a database system (40), in which the data is stored without structural interrelationships,
**characterized by**
- a facility for executing data management operations and data access actions, which are apportioned in their totality to a number of web pages, which include the respective associated database management and database access commands,
and in that
- a facility which forms the totality of the interrelationships linking the data included in the database system (40), only by references of the respective associated web pages (11) containing the corresponding database access commands, to one another.

16. Computer system according to Claim 15, **characterized in that** the computer system has an Internet connection and the web pages (11) can be accessed over the Internet.

## Revendications

1. Procédé pour la gestion de données dans un système de base de données installé sur un ordinateur, dans lequel :
- on conserve les données dans le système de base de données (40) sans combinaisons structurelles les unes avec les autres,
**caractérisé par le fait que**
la totalité des opérations de gestion de données et des accès aux donnée est répartie sur plusieurs pages web (11) qui comprennent les instructions respectivement associées de gestion de bases de données et d'accès aux bases de données, et
la totalité des combinaisons de données conservées dans le système de base de données (40) les unes avec les autres n'est formée que par des renvois les unes aux autres des pages web 11), respectivement associées et contenant les instructions correspondantes d'accès aux bases de données.

2. Procédé selon la revendication 1, **caractérisé par le fait que** la gestion de données au moyen des pages web (11) s'effectue via Internet.

3. Procédé selon la revendication 1 ou 2, **caractérisé par le fait que** les instructions d'accès aux bases de données sont réalisées en standard SQL.

4. Procédé selon l'une des revendications 1 à 3, **caractérisé par le fait que** les pages web (11) sont réalisées en code HTML ou XML.

5. Procédé selon l'une des revendications 1 à 4, **caractérisé par le fait que** le système de base de données (40) comprend plusieurs sources de données avec différents formats de base de données.

6. Procédé selon l'une des revendications 1 à 5, **caractérisé par le fait qu'**une procédure d'enregistrement et/ou une vérification d'autorisation d'utilisateur sont réalisées par l'intermédiaire d'une page web (11).

7. Procédé selon l'une des revendications 1 à 6, **caractérisé par le fait qu'**une opération d'effacement dans le système de base de données (40) est réalisée avec un décalage dans le temps après que des données à effacer ont été identifiées au moyen d'une page web (11) .

8. Procédé selon la revendication 7, **caractérisé par le fait que** l'opération d'effacement peut être annulée dans les limites d'un temps spécifié.

9. Programme informatique pour la gestion de données dans un système de base de données comprenant un code de programme pour la réalisation des étapes du procédé selon l'une des revendications 1 à 8 lorsque le programme tourne sur un ordinateur.

10. Structure de données dans laquelle de nombreuses données sont mémorisées au moyen d'un système de base de donnée,
**caractérisée par**
- de nombreuses pages web (11) sur lesquelles est répartie la totalité des opérations de gestion de données et des accès de données sous la forme d'instructions respectivement associées de gestion de bases de données et d'accès aux bases de données
et **caractérisée par le fait que**
- la totalité des combinaisons de données contenues dans le système de base de données (40) les unes avec les autres n'est formée que par des renvois des pages web (11), respectivement associées et contenant les instructions correspondantes d'accès aux bases de données, les unes aux autres.

11. Structure de données selon la revendication 10, **caractérisée par le fait qu'**une entrée et/ou une sortie de données peuvent être réalisées via Internet.

12. Structure de données selon la revendication 10 ou 11, **caractérisée par le fait que** les instructions d'accès aux bases de données sont réalisées en code SQL.

13. Utilisation du programme informatique selon la revendication 9 pour la gestion de la maintenance de plusieurs appareils distants les uns des autres.

14. Utilisation du programme informatique selon la revendication 9 pour l'exploitation d'une bourse de tâche pour la réception, la mémorisation, la transmission, la documentation et la facturation de tâches de travail entre un nombre spécifié de donneurs de tâches et d'exécuteurs de tâches.

15. Système informatique pour la gestion de données dans un système de base de données (40) dans lequel les données sont mémorisées sans combinaisons structurelles les unes avec les autres,
**caractérisé par**
- un dispositif pour la réalisation d'opérations de gestion de données et d'accès aux données qui sont toutes réparties sur de nombreuses pages web qui comprennent les instructions respectivement associées de gestion de bases de données et d'accès aux bases de données
et par le fait que
- un dispositif ne forme la totalité des combinaisons de données contenues dans le système de base de données (40) les unes avec les autres que par des renvois des pages web, respectivement associées et contenant les instructions correspondantes d'accès aux bases de données, les unes aux autres.

16. Système informatique selon la revendication 15, **caractérisé par le fait que** le système informatique comporte une connexion à Internet et peut accéder aux pages web (11) via Internet.
